# FASCICULE DE BREVET EUROPEEN

(11) **EP 2 236 445 B1**
(45) Date de publication et mention de la délivrance du brevet: **27.04.2011**
(21) Numéro de dépôt: 10360008.6
(22) Date de dépôt: 09.02.2010
(51) Int. Cl.: B65G 69/00

(54) **Dispositif d'immobilisation de véhicule de transport de marchandises, procédé et utilisation correspondants**
Vorrichtung zum Halten eines LKW, Verfahren und Verwendung derselben
Device for stopping a truck, method and use of the same

(30) Priorité: 02.04.2009 FR 0901607
(43) Date de publication de la demande: 06.10.2010
(73) Titulaire: Expresso France Sarl, 67319 Wasselonne (FR)
(72) Inventeur: Roere, Michel, 67720 Weyersheim (FR)
(74) Mandataire: Munier, Laurent

(56) Documents cités:
- WO-A-01/43526
- FR-A- 2 890 951

## Description

La présente invention se rapporte au calage de roue de véhicule, typiquement de camion.

L'invention concerne en premier lieu un dispositif bloqueur de roue pour la mise en oeuvre d'une procédure de chargement et déchargement dudit véhicule.

Des dispositifs bloqueurs comprenant au moins un moyen d'immobilisation de la roue déplaçables d'une position initiale repos vers une position de travail à l'avant du pneu choisie parmi une pluralité de positions possibles sont connus. Ces dispositifs comprennent au moins un mécanisme de fonctionnement; le système de chargement et déchargement présentant un quai ou sas et au moins un moyen de guidage latéral pour le stationnement dudit véhicule s'étendant perpendiculairement par rapport au quai. Les dispositifs bloqueurs connus sont placés dans ledit moyen de guidage (voir les documents US 3 305 049 et DE 4 427406).

D'autres dispositifs connus présentent des moyens de calage se déplaçant horizontalement pour bloquer l'arrière du camion au niveau du quai.

Les moyens de calage connus présentent souvent une cale pleine sensiblement triangulaire (voir les documents US 3305049 et DE 4427406). Ce type de cale ne bloque réellement que les petits véhicules, car les grands camions avec grandes roues peuvent passer par dessus ce type de cale.

De plus, le document US 3 305 049 décrit une cale montée sur un axe pivotant entraînant un escamotage vers le haut. Ce dernier mouvement risque de provoquer une collision avec le bas des petits véhicules.

Des calages par appui du pneu sur des cylindres métalliques sont connus (voir barres décrites par le document FR 2 832 112). Mais ces barres sont immobilisées au même niveau de hauteur et à l'horizontal. Ils ne sont prévus que pour une seule taille de camion.

Or, des camions et autres véhicules à pneus tels que remorques, camionnettes, fourgons de différentes tailles circulent et doivent charger et décharger leurs marchandises.

Un camion plus grand a des roues plus grandes qu'un camion plus petit qui présentera des roues de plus petit diamètre. A l'exception des camions surbaissés.

En particulier, le dispositif décrit par le document WO 95/24 353 se déplacera horizontalement en fin de course avec la roue du camion jusqu'à ce que celui-ci touche le quai.

Il est connu par le document FR 2 890 951 un dispositif de blocage de roue de véhicule, selon le préambule de la revendication 1, comportant un dispositif de détection de pneu et un système de levage permettant d'adapter la pièce de serrage à la taille du pneu. Néanmoins la pièce de serrage monte par rotation d'un cylindre jusqu'au contact du pneu. Il s'ensuit un contact ponctuel sur l'angle du pneu. Cela nuit à l'efficacité du blocage. Par ailleurs le doigt remonte dès que le pneu est détecté, il existe donc un risque que le cylindre rencontre un garde boue ou une autre pièce du véhicule qu'il risque ainsi d'endommager. Enfin, il existe un risque de mal tenir les roues de dimension extrême. En effet les camions utilisant un même quai de chargement ou déchargement ont des roues avec des diamètres allant de 600 à 1050 mm.

Il en découle que les dispositifs de calage connus sont insuffisants pour résoudre de manière satisfaisante les besoins de calage de roue à un poste de chargement / déchargement.

L'invention vise à résoudre ces inconvénients et permettre de caler des véhicules de différentes tailles possédant des roues de différents diamètres, et avec une qualité de blocage constante, quel que soit ledit diamètre.

Dans ce but, la présente invention propose un dispositif d'immobilisation de véhicule de transport de marchandises pendant les phases de transbordement dudit véhicule, par action sur le pneu d'une de ses roues, comprenant un moyen de guidage latéral dudit véhicule positionné parallèlement à la direction de roulement du véhicule à immobiliser, un chariot mobile le long dudit moyen de guidage, un moyen de déplacement dudit chariot le long du moyen de guidage et un moyen de verrouillage dudit chariot sur ledit moyen de guidage, un moyen de détection du pneu, une pièce de calage dont une extrémité est fixée sur le châssis du dispositif, un mécanisme de rotation de ladite pièce de calage. Le dispositif comprend en plus un moyen de mesure du diamètre du pneu et un moyen de traitement de ladite mesure en vue du réglage de la position angulaire de ladite pièce de calage.

Selon un mode de réalisation préféré de l'invention, ladite pièce de calage est destinée à appuyer sur la face avant de ladite roue

Selon un autre mode de réalisation préféré de l'invention, la surface d'appui sur le pneu de la pièce de calage présente une forme incurvée, de sorte qu'elle peut épouser l'arrondi créé par l'inclinaison par rapport au pneu

Selon un mode de réalisation particulièrement préféré de l'invention, l'effort d'appui de la pièce de calage sur le pneu est sensiblement horizontal.

Selon un autre mode de réalisation préféré de l'invention, le moyen de verrouillage du chariot sur le moyen de guidage est indépendant de la position angulaire de la pièce de calage.

La présente invention propose également un procédé d'immobilisation d'un véhicule de transport de marchandises pendant les phases de transbordement dudit véhicule, par action sur le pneu d'une de ses roues, au moyen d'un dispositif d'immobilisation comprenant un moyen de guidage latéral dudit véhicule positionné parallèlement à la direction de roulement du véhicule à immobiliser, un chariot mobile le long dudit moyen de guidage, un moyen de déplacement dudit chariot le long du moyen de guidage et un moyen de verrouillage dudit chariot sur ledit moyen de guidage, un moyen de détection du pneu, une pièce de calage dont une extrémité est fixée sur le châssis du dispositif, un mécanisme de positionnement de ladite pièce de calage, et comprenant les étapes suivantes :
- positionnement du véhicule parallèlement au dispositif de blocage
- détection du pneu et mesure de son diamètre
- positionnement du dispositif de sorte à ce que la pièce de calage se situe à l'aplomb de l'avant du pneu
- positionnement de la pièce de calage d'une valeur dépendant du diamètre du pneu mesuré
- recul du dispositif jusqu'à appui horizontal de la pièce de calage sur le pneu.

L'invention a encore pour objet l'utilisation d'un dispositif tel que décrit ci-dessus pour le chargement ou le déchargement de marchandises d'un véhicule à un système de chargement et déchargement comprenant des moyens :
- de signalétique, notamment attente véhicule ;
- de calage ;
- de temporisation avant calage ;
- de décompte du temps entre deux signaux ;
- d'ouverture porte ;
- de mise en place du niveleur ;
- de chargement ou déchargement ;
- de rangement du niveleur ;
- de fermeture de porte ;
- de retrait du calage ;
- d'impulsion sur le bouton « décalage »,
- D'autres avantages de l'invention apparaîtront à la lecture de la description des dessins donnée à titre non limitatif et dans laquelle :
- La fig. 1 est une vue en élévation d'un moyen de guidage comprenant un dispositif de calage selon l'invention, utilisé dans un système de chargement et déchargement de véhicules ;
- La fig. 2 est une représentation de coté du dispositif selon l'invention calant les roues avec les positions a, b, c correspondant aux différents diamètres de roue ;
- La fig. 3 est une représentation de face du dispositif de la figure 2 avec les positions a, b, c correspondant aux différents diamètres de roue;
- La fig. 4 est une représentation en élévation avec arraché du chariot selon l'invention ;
- La fig. 5 est un organigramme présentant les différentes étapes de fonctionnement du dispositif de calage selon l'invention.

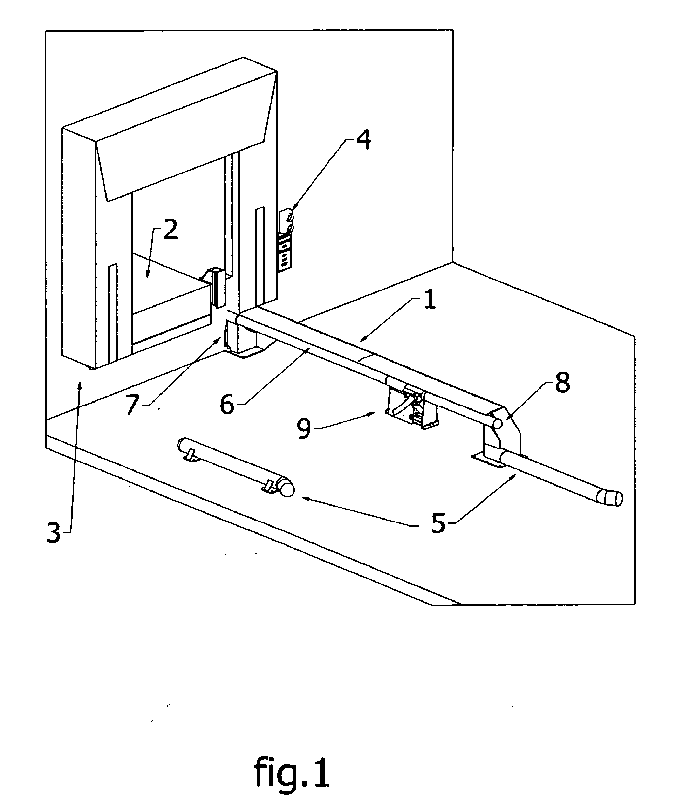

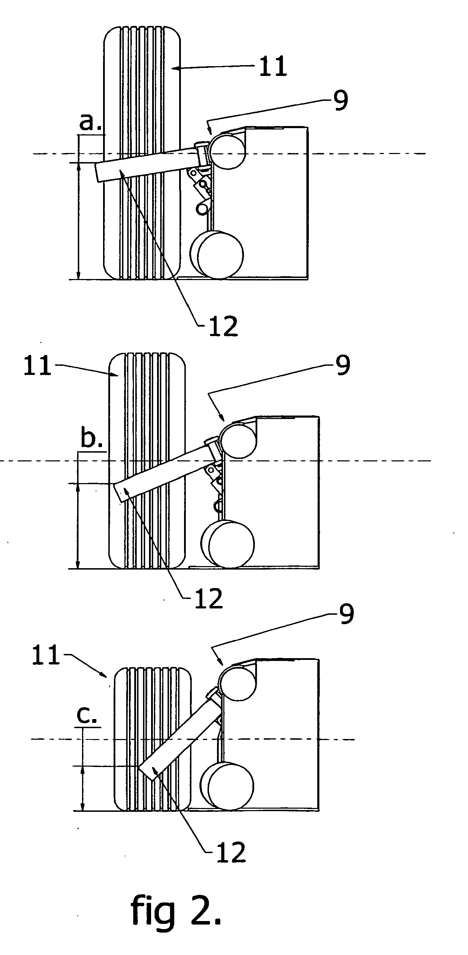

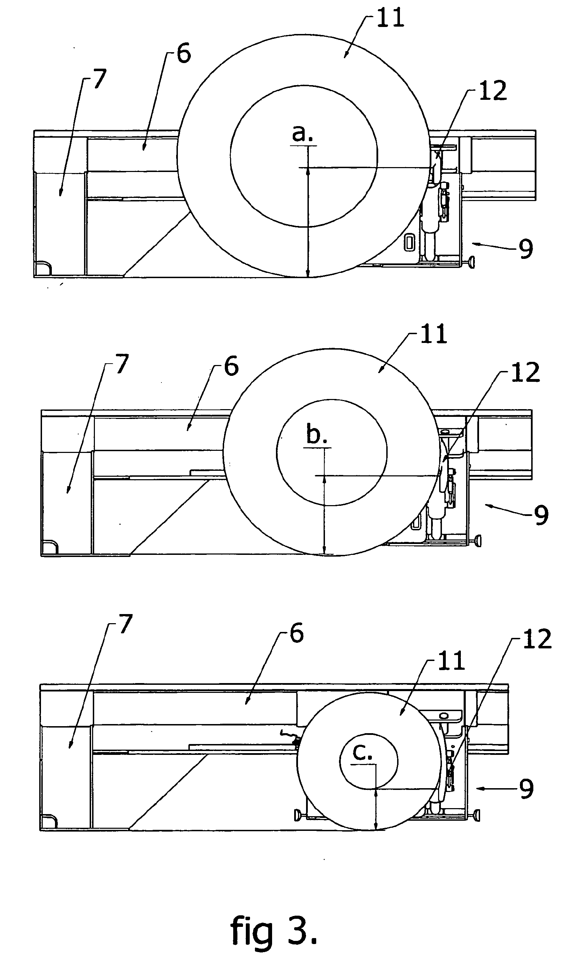

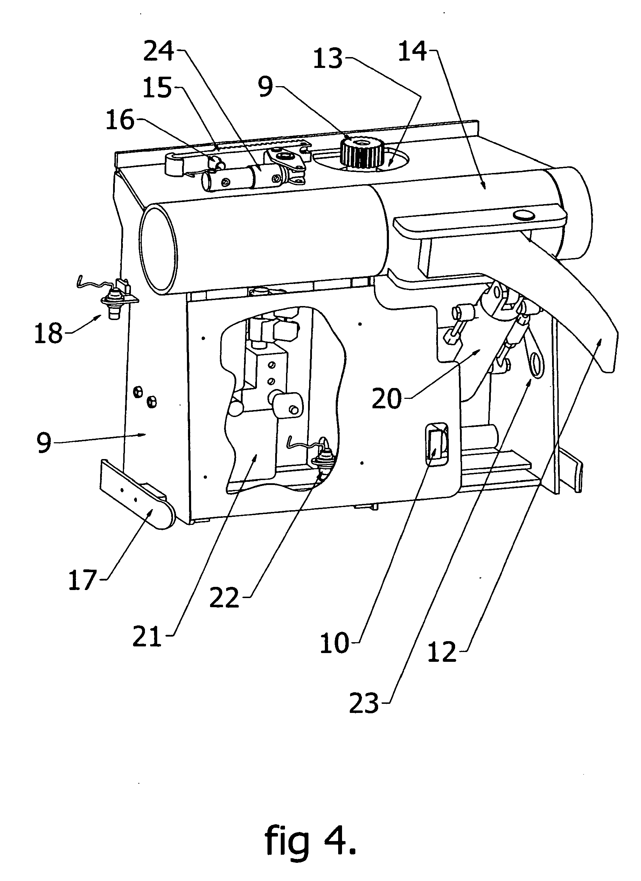

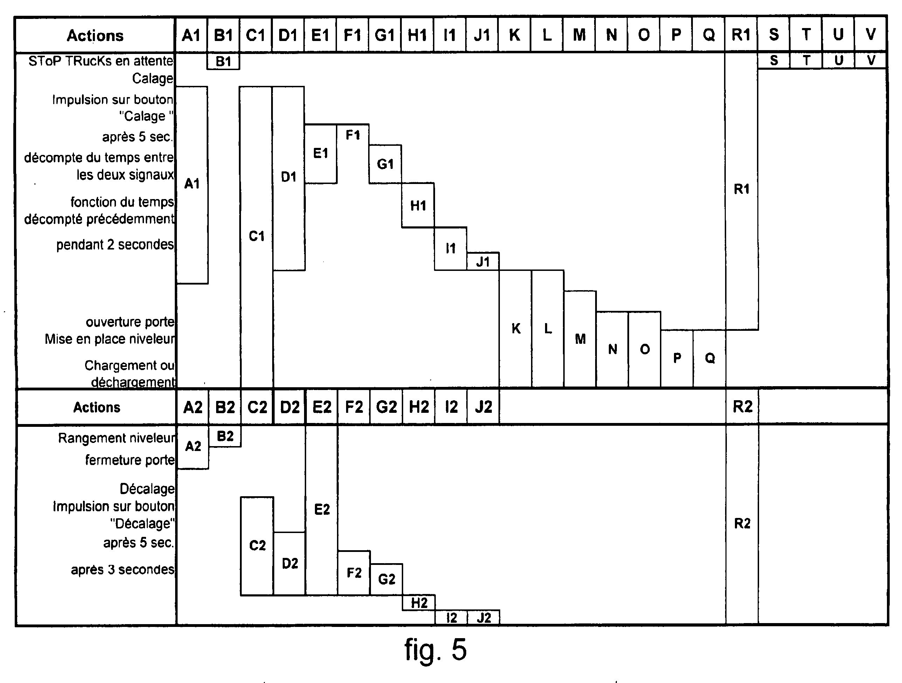

Le dispositif d'immobilisation de véhicule 1 représenté figures 1, 2, 3 et 4 est disposé dans une installation de mise en oeuvre d'une procédure représentée figure 5 de chargement et déchargement de véhicule. Ce système de chargement et déchargement 2 comprend un sas 3 réalisé à base d'un quai et d'une porte de fermeture, des moyens de signalétique de type connu permettant d'amener le véhicule en marche arrière au contact du sas 3. Ces moyens de signalétique comprennent des feux de signalisation 4 et des moyens de guidage latéraux 5 matérialisés sur le sol et s'étendant perpendiculairement par rapport au quai du sas 3. Le moyen de guidage comprend un tube rectiligne 6 relié à chaque extrémité à un moyen support 7, 8. Le premier moyen support 7 est ajusté contre le quai. Le deuxième moyen support 8 présente un tube dans lequel viendra s'enclencher un des moyens de guidage 5.

Une crémaillère permet de déplacer le dispositif embarqué sur un chariot 9 le long du rail de guidage, et un système intelligent de détection 10 comprenant une cellule permet de détecter le premier pneu 11 posé au sol. Un système de mesure relève alors le diamètre extérieur du pneu 11 et l'enregistre.

Le dispositif comprend une pièce de calage 12 qui, en s'appuyant sur le pneu 11 d'une roue, le bloque et immobilise ainsi le véhicule en l'empêchant de s'éloigner du quai. La pièce de calage 12 présente une forme incurvée. Cette forme présente d'une part l'avantage de permettre un contact optimal sur le pneu 11, lequel contact s'établit sur une largeur significative. D'autre part, elle donne une plus grande rigidité à la pièce et permet donc d'en diminuer l'épaisseur pour lui permettre de se glisser entre le garde boue et le pneu sans dommage pour celui-ci.

Un système de traitement de données déduit de ce diamètre la trajectoire à suivre par la pièce de calage pour suivre au plus près la forme du pneu 11 et éviter de percuter d'autres parties du véhicule, comme des garde-boue ou des lampes, par exemple, et la position finale à adopter pour l'appui de la pièce de calage 12 sur la face du pneu 11. Cette position doit s'adapter à chaque diamètre de pneu pour optimiser le calage mais aussi le décalage. En effet, si la pièce de calage appuie trop haut ou trop bas, le calage n'est pas optimal. En particulier si le calage s'effectue plus haut que l'axe de la roue, le décalage est problématique si l'escamotage de la pièce de calage doit s'effectuer par rotation de ladite pièce. En effet, ladite pièce bute alors sur le pneu et ne peut pas s'escamoter.

Une fois que la pièce de calage est dans sa position verticale déterminée par le système de traitement de données actionnant la partie pivotante 14, le chariot 9se met en mouvement pour rapprocher la pièce de calage 12 du pneu 11, jusqu'au contact franc de ladite pièce avec le pneu 11. A ce moment-là, le moyen de verrouillage 15 verrouille le chariot 9, donc le dispositif sur le moyen de guidage 5. Par conséquent, le dernier mouvement est horizontal. Ainsi, l'effort appliqué est également horizontal. Le choix de l'horizontalité pour le dernier mouvement garantit un bon contact sur le pneu 11 et permet une immobilisation efficace du véhicule.

Le chariot 9 est équipé de matériel de détection 16 du blocage chariot, d'un système de sécurité 17, d'un matériel de détection du retour du chariot 18. Ce retour, comme les autres déplacements du chariot, est obtenu par le moyen d'entrainement 19, la pièce de calage 12 est entraînée en rotation par le dispositif d'élévation 20 actionné depuis la centrale d'énergie hydraulique 21, surveillée par un moyen de détection 22. Si nécessaire, le dispositif peut être déverrouillé par une manette manuelle 23.

Les étapes de fonctionnement du dispositif selon l'invention sont représentées figure 5.

Fonctionnement :

**Actions conduisant au calage et à la libération du véhicule**

| | | | |
|---|---|---|---|
| A1 | Buzzer actionné | A2 | Porte fermée |
| B1 | feu vert extérieur allumé, le | B2 | niveleur du sas 3 rangé |
| | camion se met en place | | |
| | parallèlement à la poutre qui sert | | |
| | également de guidage | | |
| C1 | à l'intérieur du bâtiment ou de la | C2 | le buzzer est actionné |
| | zone de chargement le feu rouge | | |
| | est allumé | | |
| D1 | le groupe hydraulique 21 est | D2 | le groupe hydraulique 21 est |
| | actionné | actionné | |
| E1 | le chariot avance | E2 | Le feu vert extérieur s'éteint, le |
| | | feu rouge extérieur s'allume | |
| F1 | la cellule 10 détecte le début du pneu 11, | F2 | la pièce de calage 12 entre dans le chariot 9 |
| G1 | la cellule détecte la fin du pneu 11 | G2 | le chariot recule |
| H1 | la pièce de calage 12 s'élève | H2 | le matériel 18 détecte le chariot |
| | | rangé | |
| I1 | le chariot 9 recule en actionnant | I2 | le feu extérieur devient vert |
| | l'entraînement 19 | | |
| J1 | le chariot 9 est verrouillé par le | J2 | le voyant « camion libre » s'active |
| | moyen 15 | | |
| K1 | détection du blocage | | |
| L1 | actionnement du voyant « camion | | |
| | calé » | | |
| M1 | autorisation « ouverture porte » | | |
| N1 | détection « porte ouverte | | |
| O1 | autorisation niveleur | | |
| P1 | détection niveleur en place | | |
| Q1 | feu vert intérieur | | |
| R1 | feu rouge intérieur | R2 | feu rouge intérieur |
| S1 | détection chariot rangé | | |
| T1 | porte fermée | | |
| U1 | niveleur rangé | | |
| V1 | voyant camion libre | | |
| | | | |

Si pendant soixante secondes, aucune des actions décrites précédemment ne se passaient, un gros voyant rouge clignotant situé sur le tableau électrique signalerait un défaut de fonctionnement. Il en serait de même si pendant les déplacements du chariot, son système de sécurité 17 rencontrait un obstacle.

Ainsi, à la fin du cycle le camion peut partir.

Bien que l'invention ait été décrite en liaison avec des structures particulières, elle n'y est nullement limitée et on peut y apporter de nombreuses variantes.

Les combinaisons des différentes réalisations représentées sur les figures ou décrites ci-dessus ne sortent pas du cadre de l'invention.

### Signes de référence

- a: rayon d'une roue de grand diamètre de 1050 mm
- b: rayon d'une roue de diamètre intermédiaire
- c: rayon d'une roue de petit diamètre de 600 mm
- 1.: Dispositif bloqueur de véhicule
- 2.: Système de chargement et déchargement de véhicule
- 3.: Sas
- 4.: Feux
- 5.: Moyen de guidage longitudinal
- 6.: Tube rectiligne
- 7: Première extrémité
- 8: Deuxième extrémité
- 9: Chariot
- 10: Moyen de détection
- 11: Pneu
- 12: Pièce de calage
- 13: Moteur d'actionnement le la crémaillère
- 14: Partie pivotante
- 15: Système de blocage
- 16: Détection de l'état de blocage
- 17: Système de sécurité
- 18: Détection de retour chariot
- 19: Entraînement du chariot
- 20: Dispositif d'élévation de la pelle de blocage
- 21: Centrale d'énergie hydraulique
- 22: Moyen détection de la sécurité positive
- 23: Manette de déverrouillage manuel
- 24: Dispositif de mise en place de blocage du chariot

Les signes de références insérés après les caractéristiques techniques mentionnées dans les revendications ont pour seul but de faciliter la compréhension de ces dernières et n'en limitent aucunement la portée.

## Revendications

1. Dispositif d'immobilisation de véhicule (1) de transport de marchandises pendant les phases de transbordement dudit véhicule, par action sur le pneu (11) d'une de ses roues, comprenant un moyen de guidage latéral (5) dudit véhicule positionné parallèle à la direction de roulement du véhicule à immobiliser, un chariot mobile (9) le long dudit moyen de guidage (5), un moyen de déplacement dudit chariot (9) le long du moyen de guidage (5) et un moyen de verrouillage (15) dudit chariot (9) sur ledit moyen de guidage (5), un moyen de détection (10) du pneu, une pièce de calage (12) dont une extrémité est fixée sur le châssis du dispositif, un mécanisme de positionnement de ladite pièce de calage (12), **caractérisé en ce que** le dispositif comporte un moyen de mesure du diamètre du pneu et un moyen de traitement de ladite mesure en vue du réglage de la position de ladite pièce de calage (12).

2. Dispositif bloqueur de véhicule (1) selon la revendication 1, dans lequel ladite pièce de calage (12) est destinée à appuyer sur la bande de roulement de ladite roue.

3. Dispositif bloqueur de véhicule (1) selon l'une des revendications précédentes, dans lequel la surface d'appui sur le pneu (11) de la pièce de calage (12) présente une forme incurvée, de sorte qu'elle peut épouser l'arrondi créé par l'inclinaison par rapport au pneu (11).

4. Dispositif bloqueur de véhicule selon l'une des revendications précédentes, dans lequel l'effort d'appui de la pièce de calage (12) sur le pneu (11) est sensiblement horizontal.

5. Dispositif bloqueur de véhicule selon l'une des revendications précédentes, dans lequel le moyen de verrouillage (15) du chariot (9) sur le moyen de guidage (5) est indépendant du positionnement de la pièce de calage (12).

6. Dispositif bloqueur de véhicule selon l'une des revendications précédentes, dans lequel le moyen de détection (10) est une cellule placée sur le chariot (9).

7. Dispositif bloqueur de véhicule selon l'une des revendications précédentes, dans lequel le chariot mobile (9) muni du moyen de verrouillage (15) et du moyen de détection (10) est intelligent, le moyen de traitement de la mesure en vue du réglage étant obtenu par un dispositif électronique ou électromécanique lié au chariot (9), ledit dispositif présentant une interface de communication avec un logiciel de calcul de la position de calage du moyen de verrouillage (15) et des déplacements correspondants.

8. Procédé d'immobilisation d'un véhicule de transport de marchandises pendant les phases de transbordement dudit véhicule, par action sur le pneu (11) d'une de ses roues, au moyen d'un dispositif d'immobilisation comprenant un moyen de guidage (5) latéral dudit véhicule positionné parallèle à la direction de roulement du véhicule à immobiliser, un chariot mobile (9) le long dudit moyen de guidage (5), un moyen de déplacement dudit chariot (9) le long du moyen de guidage (5) et un moyen de verrouillage (15) dudit chariot (9) sur ledit moyen de guidage (5), un moyen de détection (10) du pneu (11), une pièce de calage (12) dont une extrémité est fixée sur le châssis du dispositif, un mécanisme de positionnement de ladite pièce de calage (12) comprenant les étapes suivantes :
- positionnement du véhicule parallèlement au dispositif d'immobilisation ;
- détection du pneu (11) et mesure de son diamètre ;
- positionnement du dispositif de sorte à ce que la pièce de calage (12) se situe à l'avant du pneu (11);
- positionnement de la pièce de calage (12) d'une valeur dépendant du diamètre du pneu (11) mesuré ;
- recul du dispositif jusqu'à appui horizontal de la pièce de calage (12) sur le pneu (11).

9. Utilisation d'un dispositif selon l'une quelconque des revendications 1 à 7 pour le chargement ou le déchargement de marchandises d'un véhicule à un système de chargement et déchargement (2) comprenant des moyens :
- de signalétique (4), notamment attente véhicule (A1, C1, C2) ;
- de calage ;
- de temporisation avant calage (A1) ;
- de décompte du temps entre deux signaux ;
- d'ouverture porte (M, N) ;
- de mise en place du niveleur (O, P) ;
- de chargement ou déchargement ;
- de rangement du niveleur (U) ;
- de fermeture de porte (T) ;
- de retrait du calage ;
- d'impulsion sur le bouton « décalage »,

## Claims

1. Device for immobilising a goods transport vehicle **(1)** during the docking phases of the said vehicle, by action on the tyre **(11)** of one of its wheels, comprising a lateral means of guiding **(5)** the said vehicle positioned parallel to the direction of movement of the vehicle to be immobilised, a carriage (9) that moves along the said guiding means **(5),** a means of moving the said carriage **(9)** along the guiding means **(5)** and a means of locking **(15)** the said carriage **(9)** on the said guiding means **(5),** a means of detecting **(10)** the tyre, a chocking part **(12)** one end of which is fixed on the frame of the device, a mechanism for positioning the said chocking part **(12), characterised in that** the device includes a means of measuring the diameter of the tyre and a means of processing the said measurement with a view to adjusting the position of the said chocking part **(12).**

2. Vehicle blocking device **(1)** according to claim 1, wherein the said chocking part **(12)** is designed to press on the tyre tread of the said wheel.

3. Vehicle blocking device **(1)** according to any of the preceding claims, wherein the bearing surface of the chocking part **(12)** on the tyre **(11)** has a curved shape, so that that it may fit the rounded shape created by the angle in relation to the tyre **(11).**

4. Vehicle blocking device according to any of the preceding claims, wherein the pressure exercised by chocking part **(12)** on the tyre **(11)** is substantially horizontal.

5. Vehicle blocking device according to any of the preceding claims, wherein the means of locking **(15)** the carriage (9) on the guiding means **(5)** is independent of the position of the chocking part **(12)**.

6. Vehicle blocking device according to any of the preceding claims, wherein the means of detection **(10)** is a cell placed on the carriage **(9).**

7. Vehicle blocking device according to any of the preceding claims, wherein the mobile carriage **(9)** equipped with the locking means **(15)** and the detection means **(10)** is intelligent, the means of processing the measurement with a view to the adjustment being obtained by an electronic or electromechanical device connected to the carriage **(9)**, the said device presenting an interface for communicating with a piece of software for calculating the blocking position of the locking means **(15)** and the corresponding movements.

8. Process of immobilising a goods transport vehicle during the docking phases of the said vehicle, by action on the tyre **(11)** of one of its wheels, comprising a lateral means of guiding **(5)** the said vehicle positioned parallel to the direction of movement of the vehicle to be immobilised, a carriage **(9)** that moves along the said guiding means **(5),** a means of moving the said carriage **(9)** along the guiding means **(5)** and a means of locking **(15)** the said carriage **(9)** on the said guiding means **(5),** a means of detecting **(10)** the tyre **(11),** a chocking part **(12)** one end of which is fixed on the frame of the device, a mechanism for positioning the said chocking part **(12),** comprising the following stages:
- positioning of the vehicle parallel to the immobilising device;
- detection of the tyre **(11)** and measurement of its diameter;
- positioning of the device so that the chocking part **(12)** is situated in front of the tyre **(11)**;
- positioning of the chocking part **(12)** according to a value dependent on the tyre diameter **(11)** measured;
- backward movement of the device until the chocking part **(12)** rests horizontally on the tyre **(11)**.

9. Use of a device according to any of claims 1 to 7 for the loading or unloading of goods on a vehicle with a loading and unloading system **(2)** comprising means of:
- signage **(4),** in particular vehicle waiting (A1, C1, C2);
- chocking;
- time delay before chocking (A1);
- counting the time between two signals;
- opening the door (M, N);
- putting the leveller in position (O, P);
- loading or unloading;
- withdrawing the leveller (U);
- closing the door (T);
- removing the chocking part;
- pressing the "chock removal" button,

## Patentansprüche

1. Immobilisierungsvorrichtung für einen Lastkraftwagen (1) während der Umladephasen des Fahrzeugs, durch Wirkung auf den Reifen (11) eines seiner Räder, mit einer seitlichen Führungseinrichtung (5) des Fahrzeugs, die parallel zur Rollrichtung des zu immobilisierenden Fahrzeugs positioniert ist, einem entlang der Führungseinrichtung (5) beweglichen Gestell (9), einer Einrichtung zum Verschieben des Gestells (9) entlang der Führungseinrichtung (5) und einer Einrichtung (15) zum Blockieren des Gestells (9) auf der Führungseinrichtung (5), einer Einrichtung (10) zum Detektieren des Reifens, einem Keilstück (12), das mit einem Ende auf dem Rahmen der Vorrichtung befestigt ist, einem Positioniermechanismus des Keilstücks (12), **dadurch gekennzeichnet, dass** die Vorrichtung eine Messeinrichtung des Durchmessers des Reifens und eine Bearbeitungseinrichtung der Messung im Hinblick auf die Regelung der Position des Keilstücks (12) umfasst.

2. Fahrzeug-Blockiervorrichtung (1) nach Anspruch 1, in welcher das Keilstück (12) dazu bestimmt ist, an die profilierte Lauffläche des Reifens anzugreifen.

3. Fahrzeug-Blockiervorrichtung (1) nach einem der vorhergehenden Ansprüche, in welcher die Angriffsfläche des Keilstücks (12) auf den Reifen (11) eine gebogene Form aufweist, derart, dass diese eine Rundung unterstützen kann, die durch eine Schrägstellung in Bezug zum Reifen (11) erzeugt wird.

4. Fahrzeug-Blockiervorrichtung nach einem der vorhergehenden Ansprüche, in welcher die Presswirkung des Keilstücks (12) auf den Reifen (11) im Wesentlichen horizontal ist.

5. Fahrzeug-Blockiervorrichtung nach einem der vorhergehenden Ansprüche, in welcher die Einrichtung (15) zum Blockieren des Gestells (9) auf der Führungseinrichtung (5) unabhängig von der Positionierung des Keilstücks (12) ist.

6. Fahrzeug-Blockiervorrichtung nach einem der vorhergehenden Ansprüche, in welcher die Detektionseinrichtung (10) eine auf dem Fahrwerk (9) angeordnete Messzelle ist.

7. Fahrzeug-Blockiervorrichtung nach einem der vorhergehenden Ansprüche, in welcher das bewegliche Gestell (9), das mit der Verriegelungseinrichtung (15) und der Detektionseinrichtung (10) versehen ist, intelligent ist, wobei die Bearbeitungseinrichtung der Messung für die Regelung durch eine elektronische oder elektromechanische Einrichtung erhalten wird, die mit dem Gestell (9) verbunden ist, wobei die Vorrichtung eine Kommunikationsschnittstelle mit einer Software zur Berechnung der Position des Keils der Blockiereinrichtung (15) und der korrespondierenden Verstellungen aufweist.

8. Verfahren zur Immobilisierung eines Lastkraftwagens während der Umladephasen des Fahrzeugs, durch Wirkung auf den Reifen (11) eines seiner Räder, mithilfe einer Immobilisierungsvorrichtung, umfassend eine seitliche Führungseinrichtung (5) des Fahrzeugs, die parallel zur Rollrichtung des zu immobilisierenden Fahrzeugs positioniert ist, ein entlang der Führungseinrichtung (5) bewegliches Gestell (9), eine Verschiebungseinrichtung des Gestells (9) entlang der Führungseinrichtung (5) und eine Verriegelungseinrichtung (15) des Gestells (9) auf der Führungseinrichtung (5), eine Einrichtung (10) zum Detektieren des Reifens, ein Keilstück (12), das mit einem Ende auf dem Rahmen der Vorrichtung befestigt ist, einen Mechanismus zum Positionieren des Keilstücks (12), mit den folgenden Schritten:
- Positionieren des Fahrzeugs parallel zur Immobilisierungsvorrichtung;
- Reifendetektion (11) und Messung seines Durchmesser;
- Positionieren der Vorrichtung, derart, dass das Keilstück (12) vor dem Reifen (11) liegt;
- Positionieren des Keilstücks (12) auf einen Wert abhängig vom gemessenen Durchmesser des Reifens (11);
- Zurückschieben der Vorrichtung bis zum horizontalen Angriff des Keilstücks (12) auf den Reifen (11).

9. Verwendung einer Vorrichtung nach einem der Ansprüche 1 bis 7 zum Beladen oder Entladen von Lastkraftwagen mit einem Lade- und Beladesystem (2), mit Einrichtungen:
- zur Signalgebung (4), insbesondere zum Halten eines Fahrzeugs (A1, C1, C2);
- zur Verkeilung;
- zur Verzögerung vor der Verkeilung (A1);
- zum Herunterzählen von Zeiten zwischen zwei Signalen;
- zur Toröffnung (M, N);
- zur Niveaueinstellung (O, P);
- zum Beladen und Entladen;
- zur Speicherung des Niveaus (U);
- zur Torschließung (T);
- zum Zurückziehen des Keils;
- zum Drücken auf den Knopf "Verschiebung".
